Europäisches Patentamt

European Patent Office

Office européen des brevets

(11) Publication number : **0 608 202 A1**

# EUROPEAN PATENT APPLICATION

(21) Application number : **94830012.4**

(22) Date of filing : **17.01.94**

(51) Int. Cl.⁵ : **G02C 7/10**

(30) Priority : **22.01.93 IT RM930027**

(43) Date of publication of application :
**27.07.94 Bulletin 94/30**

(84) Designated Contracting States :
**DE ES FR GB**

(71) Applicant : **SOCIETA' ITALIANA VETRO - SIV - S.p.A.**
**Zona Industriale**
**I-66050 San Salvo CH (IT)**

(72) Inventor : **Townsend, Peter David**
**University of Sussex**
**UK-BN1 9QH Brighton (GB)**
Inventor : **Menaguale, Daniela**
**27 Via Luigi Sturzo**
**I-66050 San Salvo CH (GB)**

(74) Representative : **Bazzichelli, Alfredo et al**
**c/o Società Italiana Brevetti S.p.A.**
**Piazza di Pietra, 39**
**I-00186 Roma (IT)**

(54) **Filter for solar radiation, particularly suitable for sunglass lenses.**

(57)   A filter for solar radiation, particularly suitable for use in sun glasses, comprises one or more layers of metal ions, implanted with suitable energy values under the surface of the clear or coloured glass.

The sunglass lenses have extremely good characteristics which can be appreciated particularly in extreme conditions.

Using the high level of flexibility of the method of implantation, it is possible to obtain shaded sunglass lenses and sunglass lenses with different degrees of filtration within the same lens.

The implanted layers are formed with gallium ions, titanium ions, etc.

FIG 1

EP 0 608 202 A1

The present invention relates to a filter for solar radiation, particularly suitable for use in sunglass lenses, made up of a substrate of transparent clear or coloured glass, and at least one thin filter layer.

It is known from the state of the art that solar filters, and sunglass lenses, which are one of their most widespread commercial applications, are obtained using transparent coloured glass or plastic materials in order to give a suitable reduction of the transmission of light to the eye.

Furthermore, certain types of solar filter are manufactured by depositing thin reflecting layers of suitable metal oxides onto a clear or coloured substrate, using known deposition methods such as evaporation or sputtering, so as to obtain high filtration characteristics, in particular for infra-red and ultra-violet rays which, although invisible, are harmful for the eyes.

The Applicant has found that a *per se* known method can be advantageously applied to the manufacture of solar filters particularly suitable for use as sunglass lenses.

In the following description reference will therefore be made to solar filters with a light transmission of between 20% and 85%, which is typical of normal sunglass lenses.

The solar filter comprises, implanted at a pre-determined depth in a substrate of transparent clear or coloured glass, at least one layer of one or more ions of suitable metals, so as to obtain a product combining the normal functions of the substrate itself (for example in the case of graded lenses the correction of sight) and those of a filter for visible, ultra-violet and infra-red rays.

The solar filters according to the present invention simultaneously give good transmission of visible radiation and improved filter capabilities in the field of infra-red and ultra-violet radiation.

Another advantage lies in the fact that it is possible to deposit thin filter layers with light transmission levels varying over the surface of the substrate as required, for example increasing from the top downward, thus manufacturing shaded filters.

Using the present invention it is also possible to produce with ease filters particularly suited for use in extreme conditions, for example the "wooden glasses" used in Arctic regions which have areas with different filter capacities on the same lens: in particular the upper and lower parts of the lens have extremely high filter capacities in order to protect the eyes from the sun's radiations and those reflected by the snow, respectively, while the central strip has a lower filter capacity to allow good visibility.

Another advantage consists in the fact that the filters produced according to the invention give high colour fidelity, much greater than that usually obtained with similar filters at present in use on the market as sunglass lenses.

In the following description the solar filters thus obtained will be indicated using the term "sunglass lenses".

Said lenses are made by implanting, at a predetermined depth in a clear or coloured substrate, at least one layer of one or more ions of the following metals: Cobalt, Gallium, Germanium, Indium, Manganese, Tantalum, Titanium, Tungsten, Silver, Gold, Copper, Iron.

Furthermore, when it is necessary to obtain high solar reflection towards the external environment and low solar reflection towards the eye, an additional layer is implanted, said layer having the characteristic that it absorbs part of the reflected solar radiation, so as to reduce reflection towards the eye.

The above solution can also be applied in case of variable transmission lenses, commonly known as shaded sunglass lenses; these lenses, for example, are characterized by having filter capabilities that decrease gradually from the top of the lens; the amount of variation of the light transmission can be chosen as desired, according to use: in the case of two implanted layers, said amount can be the same for both the reflecting and the absorbing layer, or different.

Sunglass lenses according to the present invention are obtained using for preference the following implantation values:
- ion energy between 20 and 200 KeV
- doses of between 2xE16 and 2xE17 ions/cm$^2$
- substrate temperature of between 30°C and 250°C.

In case it should be necessary to add a layer capable of absorbing part of the reflected energy, so as to avoid damage to the eye, titanium ions are implanted within the following values:
- ion energy between 150 KeV and 300 KeV
- doses of between 2xE16 and 2xE17 ions/cm$^2$
- substrate temperature of between 30°C and 250°C.

The substrate is either clear or coloured, transparent glass, of any thickness, but in any case suitable for use as a corrective lens, either graduated or non-graduated.

In addition to the ion implantation process it is also possible to have the sunglass lenses undergo surface treatment to increase their resistance to aging and use, thus obtaining an extremely resistant product.

Further advantages and characteristics of the present invention will be more clearly seen with the aid of the following examples and drawing, which are given merely as an example.

## EXAMPLE 1

A substrate of green optical glass with a thickness of 2 millimeters, (UV transmission = 0.4%, light transmission = 33%, light reflection <8%, energy transmission = 14%, colour fidelity index Ra=86%) is implanted with Gallium ions with an implantation energy of $Ei = 50KeV$ and a dose of $d=1.1xE17$ ions/cm$^2$; the temperature of the substrate is controlled near around 50°C.

The optical characteristics of the sunglass lens thus obtained are the following:

UV Transmission = 0.1%

Light Transmission = 20%

Light Transmission at 555 nm = 22%

Light Reflection = 30%

Energy Transmission = 9%

Energy Reflection = 23%

Colour Fidelity Index = 86% where the transmission of ultra-violet radiation is measured at wavelengths of between 280 and 380 nm according to DIN 67507 regulations; the transmission and reflection of visible radiation are measured within the interval of 380-780 nm according to CIE 1932 regulations, with C2° illuminant; the transmission and reflection of energy are measured at wavelengths of between 350 and 210 nm according to ISO SID 9050 regulations; the colour fidelity index Ra is calculated according to DIN 67507 regulations; all measurements are made using a Perkin Elmer Lambda 9 spectrophotometer.

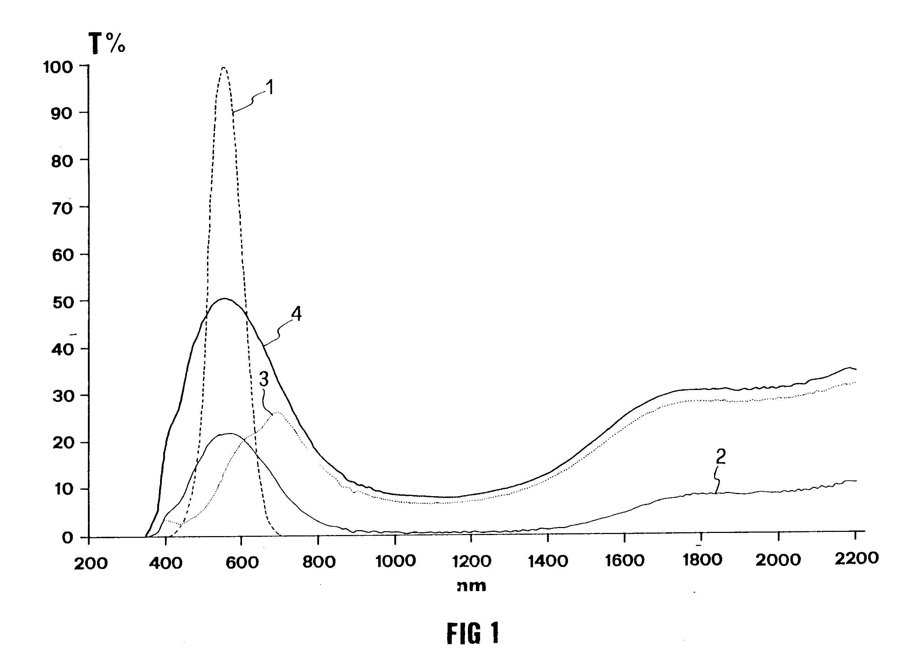

Figure 1 shows several light transmission curves according to wavelength.

Curve 1 is the response of the theoretical eye.

Curve 2 represents the transmission of the sunglass lens produced according to example 1. It should be noted that said curve not only has a shape extremely similar to curve 1 showing the response of the theoretical eye, but that it also peaks at the same wavelength as the peak in the theoretical curve; we have therefore an almost perfect solar filter.

Curve 3 represents light transmission of one of the known commercially available lenses: it can be seen that the transmission peak is in a different position from that indicating maximum sensitivity of the eye, and very close to the near infra-red field.

At the same time, the lens produced according to example 1 gives almost total elimination of ultraviolet radiation, while maintaining light transmission values of around 20%; the light transmission value at 555 nm is 22%, whereas at wavelengths of over 780 nm there is a strong decrease in infra-red radiation.

In conclusion, the sunglass lens has extremely high quality characteristics in terms of colour fidelity and reduction of dangerous radiation (UV and IR), while at the same time maintaining good light transmission (20-22%).

The sunglass lenses at present available commercially, even when treated with surface coatings, do not allow all the above advantages to be obtained simultaneously.

## EXAMPLE 2

Green coloured optical glass with a thickness of 2 millimeters, (UV transmission = 2.1%, light transmission = 58%, light reflection <8%, energy transmission = 32%, colour fidelity index Ra=92%) is implanted with Gallium ions with an implantation energy of 50KeV and a dose of 1xE17 ions/cm$^2$; the temperature of the substrate is controlled near 50°C.

The optical characteristics of the sunglass lens thus obtained (measured within the same wavelengths and according to the same regulations used for Example 1) are the following:

UV Transmission = 1.1%

Light Transmission = 48%

Light Transmission at 555 nm = 50%

Light Reflection = 17%

Energy Transmission = 27%

Energy Reflection = 12%

Colour Fidelity Index Ra = 92%

In this case also, with reference to figure 1, curve 4, showing light transmission for the above lens, not only has a similar shape to that typical of the theoretical eye, but also peaks at the same wavelength as the peak on the theoretical curve 1, thus confirming that an almost perfect filter has been produced.

Dangerous radiations (UV and IR) are sufficiently reduced, while at the same time giving both good vision, thanks to the high light transmission value obtained, and high-colour fidelity.

EXAMPLE 3

A clear glass with a thickness of 2 millimeters, (UV transmission = 84%, light transmission = 92%, light reflection 8%, energy transmission = 92%, energy reflection = 8%) is implanted with a first layer of Titanium ions with an implantation energy of 200 KeV and a dose d=1.1E17 ions/cm$^2$, and a second layer of Gallium ions with an implantation energy of 50KeV and a dose of d=4xE16 ions/cm$^2$; the temperature of the substrate is kept around 50°C.

The optical characteristics of the sunglass lens thus obtained (measured within the same wavelengths and according to the same regulations used for Example 1) are the following:

UV Transmission = 32%
Light Transmission = 70%
External Light Reflection = 16%
Light Reflection towards the Eye = 8%
Energy Transmission = 76%
Energy Reflection = 15%
Colour Fidelity Index Ra = 92%

In this case the absorbing effect of the implanted Titanium layer which, from the layer of Gallium to the eye, partially attenuates the energy reflected from the rear side by the implanted layer of Gallium.

EXAMPLE 4

A substrate of clear glass with a thickness of 2 millimeters (with the same optical characteristics as that used in Example 3) is implanted with a first layer of Titanium ions with an implantation energy of 200 KeV and a dose of d=1E17 ions/cm$^2$, and with a second layer of Gallium ions having a dose varying, from the top of the lens downward, from a maximum of 1xE17 to a minimum of 4xE16 ions/cm$^2$; the temperature of the substrate is maintained at around 50°C.

The optical values of the lens thus obtained, calculated in the same manner used for Example 1, are the following:

| Area | UVT | LT | GLR | TLR | ET | ER | Ra |
|---|---|---|---|---|---|---|---|
| top | 13% | 45% | 30% | 18% | 59% | 24% | 84% |
| center | 20% | 60% | 22% | 16% | 69% | 18% | 88% |
| bottom | 32% | 71% | 16% | 8% | 76% | 15% | 92% |

in which UVT is ultraviolet transmission; LT is light transmission; GLR is light reflection measured on the Gallium layer side; TLR is light reflection measured on the Titanium layer side; ET is energy transmission; ER is energy reflection; Ra is the colour fidelity index.

It is evident that the presence of the Titanium layer between the Gallium layer and the eye creates a reduction of the light reflection caused by the Gallium layer.

In can also be seen that, although in this example a fixed dose was used for the absorbent Titanium layer, this dose could vary across the surface of the lens itself.

The sunglass lens thus obtained has light transmission that increases from the top downward, thus showing the typical characteristics of a shaded sunglass lens.

It is understood that, although the examples relate to the use of Gallium and Titanium ions, singly or together, other ions chosen from the list given earlier in the present description can also be used to manufacture sunglass lenses.

The optical values and the colour of the lens will depend on the energy, dose and temperature used for implantation, on the type of ion implanted and on the type of substrate.

Furthermore, suitably coloured lenses can also be obtained by implanting within the same layer a suitable combination of more than one type of ion.

**Claims**

1.    A filter for solar radiation, comprising a substrate of transparent clear or coloured glass, particularly suitable for use as a sunglass lens, characterized in that it contains at least one layer of ions implanted within said substrate, said ions being chosen from Cobalt, Gallium, Germanium, Indium, Manganese, Tantalum, Titanium, Tungsten, Silver, Gold, Copper and Iron, said ions being implanted at an implantation dose of between 2xE16 and 2xE17 ions/cm$^2$, an implantation energy of between 20 and 200 KeV and with the substrate at a temperature of between 30 and 250°C.

2. A filter according to claim 1, further comprising at least one other layer of Titanium ions implanted at an energy of between 150 and 300 KeV and at a dose of between 3xE16 and 3xE17, to give said screening optical absorption characteristics such as to partially reduce light reflection.

3. A filter according to claim 1, comprising a single layer of Gallium ions implanted with an implantation energy of 50 KeV, a dose of between 4xE16 and 1.1xE17 ions/cm$^2$ and with the glass substrate at a temperature of between 50° and 60°C.

4. A filter according to claims 2 or 3, further comprising, as the layer for reducing the rear face light reflection, a layer of Titanium ions implanted with an energy of 200 KeV, a dose of between 1.0 and 1.1xE17 ions/cm$^2$ and with the substrate at a temperature of approximately 50°C.

5. A filter according to any one of the preceding claims, in which the dose of ions implanted in each layer varies for each surface element undergoing implantation, so as to create a filter with light transmission varying from one surface element and an adjacent element lower down the lens.

FIG 1

European Patent
Office

**EUROPEAN SEARCH REPORT**

Application Number

EP 94 83 0012

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | PATENT ABSTRACTS OF JAPAN<br>vol. 5, no. 88 (P-065) 9 June 1981<br>& JP-A-56 033 601 (CHIYOU LSI GIJUTSU<br>KENKYU KUMIAI) 4 April 1981<br>* abstract * | 1 | G02C7/10 |
| A | PATENT ABSTRACTS OF JAPAN<br>vol. 16, no. 244 (C-0947) 4 June 1992<br>& JP-A-04 052 277 (TOYOTA CENTRAL RES &<br>DEV LAB INC) 20 February 1992<br>* abstract * | 1 | |
| A | US-A-4 262 056 (G.K. HUBLER)<br>* claims * | 1 | |
| A | US-A-4 045 125 (G. FARGES)<br>* column 1 - column 6, line 48 * | 1 | |
| A | US-A-3 826 751 (N.U. LALIBERTE)<br>* column 1 - column 2, line 31 * | 1 | |
| A | FR-A-1 380 785 (AMERICAN CYANID COMPANY)<br>* page 1 - page 4 * | 1 | TECHNICAL FIELDS SEARCHED (Int.Cl.5)<br><br>G02C |
| A | EP-A-0 115 656 (G.E. WHITE)<br>* claim 6 * | 1,5 | |

The present search report has been drawn up for all claims

| Place of search | Date of completion of the search | Examiner |
|---|---|---|
| THE HAGUE | 18 April 1994 | CALLEWAERT, H |